# EUROPEAN PATENT SPECIFICATION

(11) **EP 1 010 618 B1**
(45) Date of publication and mention of the grant of the patent: **22.05.2002**
(21) Application number: 00100172.6
(22) Date of filing: 01.08.1997
(51) Int. Cl.: B64D 27/26

(54) **Integrated muffler and exhaust cone for aircraft tailcone**
Integrierter Schalldämpfer und Abgasendstück für Flugzeug
Silencieux et cône d'échappement integrés pour avion

(30) Priority: 02.08.1996 US 23080 P
(43) Date of publication of application: 21.06.2000
(62) Divisional of application: 97937092.1
(73) Proprietor: Honeywell International Inc., Morristown, New Jersey 07962 (US)
(72) Inventor: Liston, Laurence D., AB-2B, PO Box 2245, Morristown, NJ 07962 (US); Schoepf, Joseph L., AB-2B, PO Box 2245, Morristown, NJ 07962 (US); Royalty, Charles M., AB-2B, PO Box 2245, Morristown, NJ 07962 (US)
(74) Representative: Brunner, Michael John

(56) References cited:
- WO-A-91/08379
- GB-A- 1 212 875
- US-A- 2 504 422

## Description

This invention relates generally to an aircraft tailcone. More particularly, the present invention relates to an integrated muffler and exhaust cone for a tailcone assembly having a gas turbine engine mounted therein.

Modem turbopop and turbofan powered aircraft carry a gas turbine engine known as an auxiliary power (APU) in addition to the main propulsion engines. The APU serves two main functions: to provide power to aircraft systems when the main engines are not running, and to enable starting the main engines without need for external power. In many business class aircraft and in aircraft used by smaller regional airlines, the APU is mounted in the tail end of the fuselage generally known as the tailcone. Typically, the engine supplier and tailcone casing supplier coordinate with the aircraft manufacturer in the installation of the APU at the manufacturer's facility. The APU is custom fit and mounted to the aircraft, and all accessories such as electrical, pneumatic, and fuel, are routed to the APU and connected. The tailcone casing supplier then fits and installs the casing, usually including an openable or removable panel for access to portions of the APU.

A problem with this kind of APU installation is the large amount of the time and expense involved in completing an installation. The mounting of the APU and routing and connection of accessories requires substantial effort by skilled technicians and engineers from the aircraft manufacturer and APU supplier. Fitting and attaching the casing requires technical support from the tailcone casing supplier as well. A complete installation can take days or even weeks at the aircraft manufacturer's facility resulting in substantial cost and inconvenience.

Another problem results from inaccessibility of the APU once the casing is in place. Typically the casing comprises two large panels that are attached to one another and the aircraft using numerous screws. The casing includes at least one small openable door for providing access to routinely monitored items such as the oil sight glass. However for anything beyond the routine day to day maintenance it becomes necessary to remove at least one of the large casing panels. Removal of just the screws holding the panels together can take thirty minutes or longer. The time spent on removing and reinstalling the tailcone casing can become particularly inconvenient and costly when it results in unplanned delay to scheduled flights.

Accordingly, a need exists for a tailcone casing that provides quick access to the entire APU mounted therein.

The present invention achieves these objects by providing an integrated muffler and exhaust cone, for use in a tailcone assembly having a gas turbine engine mounted therein, comprising a casing defining a conduit for porting the exhaust gas from said engine out of said tailcone assembly and further comprising a plurality of baffles circumscribing said conduit inside said casing.

The tailcone assembly is installed on the aircraft by mounting the tailcone in the adjustable dolly, rolling the dolly up to the aircraft, adjusting the dolly until the tailcone assembly is properly aligned for attachment to the aircraft, connecting the engine accessories to the aircraft, and bolting the tailcone to the aircraft.

These and other objects, features and advantages of the present invention are specifically set forth in or will become apparent from the following detailed description of a preferred embodiment of the invention when read in conjunction with the accompanying drawings, in which:-
Fig. 1 depicts a perspective view of a tailcone assembly comprising an integrated muffler and exhaust cone according to the present invention.
Fig. 1A depicts an enlarged fragmented cross-sectional view of an encircled portion of Fig. 1.
Fig. 2 depicts a perspective view of the support member portion of the tailcone assembly of Fig. 1.
Fig. 3 depicts a partially cross sectional partially cutaway side view of a tailcone assembly comprising an integrated muffler and exhaust cone according to the present invention.
Fig. 4 depicts a fragmented cross-sectional view of the integral inlet duct.
Fig. 5 depicts an enlarged fragmentary sectional view of an encircled portion of Fig. 1.
Fig. 6A depicts a side view of an integral tailcone and power assembly mounted in an installation dolly.
Fig. 6B depicts an aft looking forward view of the tailcone assembly and installation dolly of FIG. 6A.
Fig. 6C depicts a top looking down view of the tailcone assembly and installation dolly of FIG. 6A.

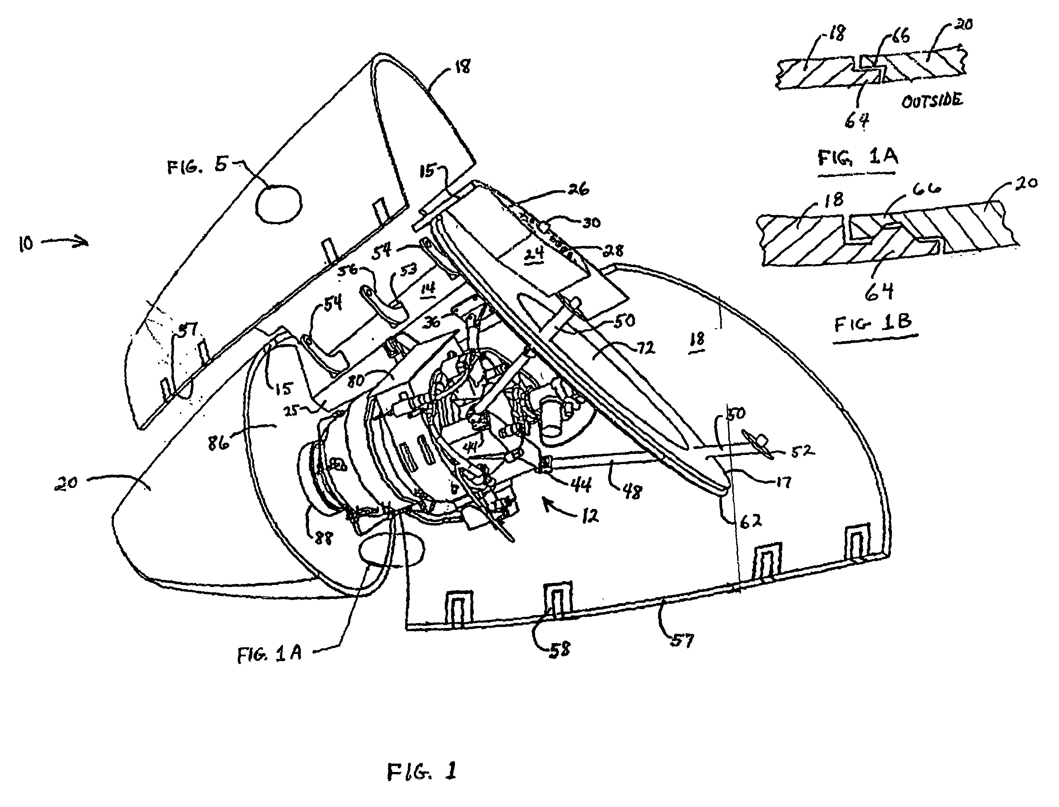

The integral tailcone and power assembly is indicated generally by the numeral 10 in FIG. 1. The tailcone assembly 10 comprises generally a gas turbine engine 12 mounted from a support member 14, two rotatable casing halves 18 hingeably mounted to support aft end 21.

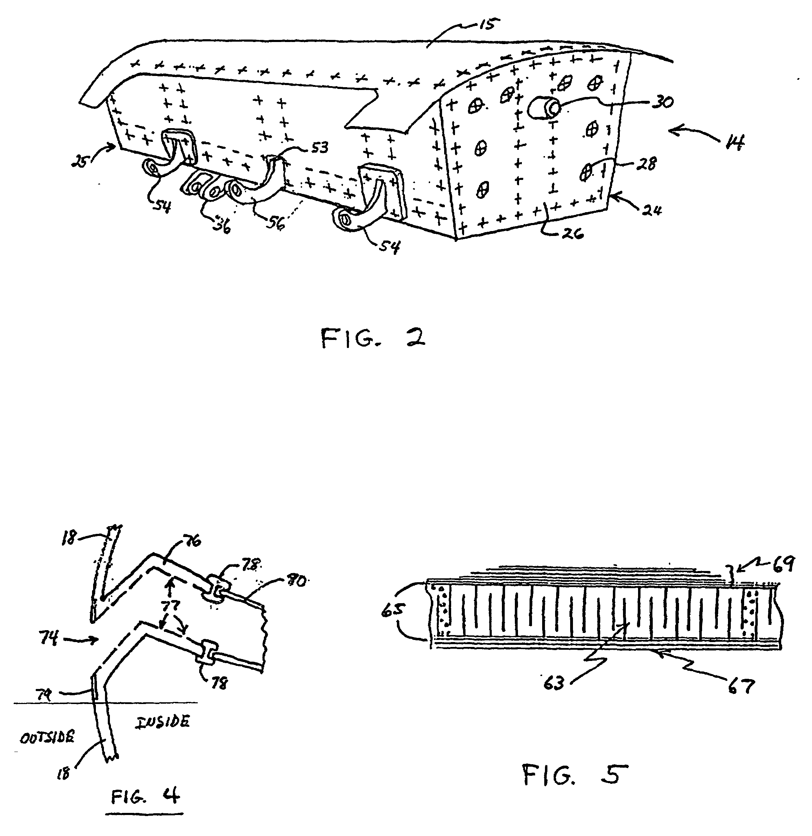

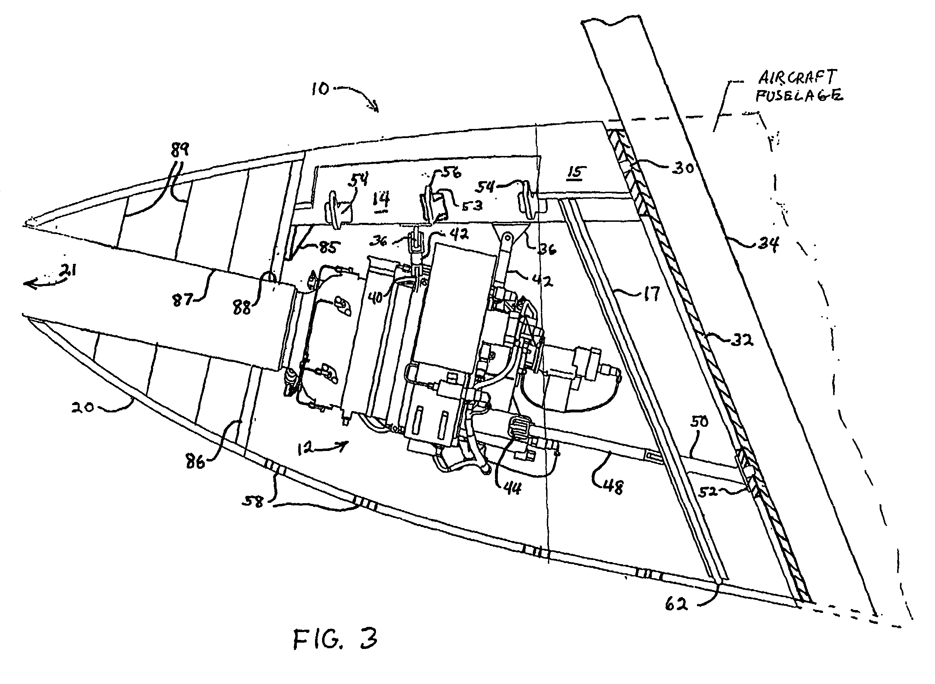

Referring to FIGS. 2 and 3, primary support for the entire tailcone assembly 10 is provided by the support member 14. The support member 14 extends longitudinally from a forward end 25 to an aft end 25. The upper surface of the support member 14 is capped by a fairing 15 contoured to define the top surface of the tailcone between the hinged edges of casing halves 18. The support member structure is thus entirely enclosed within the tailcone 10. Alternatively, the upper surface of the support member 14 may be contoured to define the top surface of the tailcone assembly. The support member construction consists of a welded box or I-beam structure preferably made from Inconel 625 sheet and plate stock. Other constructions or materials may be used depending on the particular installation.

The support member 14 is adapted for attachment to the rear bulkhead 32 and tail spar 34 of the aircraft. The forward end of support member 14 is tapered at an angle to fit the aircraft bulkhead 32, and provided with a flange 26 having bolt holes 28 and a locating pin 30. When the tailcone assembly 10 is installed, the flange 26 is bolted to the aircraft bulkhead 32, and preferably also to the tail spar 34, thereby rigidly connecting the tailcone assembly to the aircraft. The connection is designed so that the support member 14 extends roughly horizontally from the aircraft.

The support member 14 further includes mounting brackets 36 for connecting to the gas turbine engine main mounts. The engine depicted in the figures has forward and rear main mount pads indicated as 38 and 40 respectively, both located on the too side of the engine. Main mounts 38 ana 40 are connected to the mounting brackets 36 through rigid links 42. It should be noted that the locations and orientations of the engine's main mounts and the support member mounting brackets 36 shown are illustrative of a typical configuration. It is contemplated mounting any suitable engine to a support member 14 regardless of how the engine mounts may be configured.

The engine 12 also includes two secondary mounts 44. The secondary mounts 44 are connected to the firewall 17 (described below) via struts 48. Opposite each of the struts 48, standoffs 50 extend from the firewall 17 to the aircraft. A flange 52 having an alignment pin and bolt holes is defined at the forward end of each standoff 50 for attachment to the aircraft bulkhead 32. The struts 48 and standoffs 50 are preferably configured to provide a direct load path between the secondary mounts 44 and the aircraft bulkhead 32. As with the main mounts, the location and orientation of the secondary mounts shown is merely illustrative of a typical installation.

Fire protection and access to the engine's accessories are provided by the firewall 17. The firewall 17 is rigidly connected to the support member 14 several inches rearward of flange 26, and preferably parallel with the aircraft rear bulkhead 32. A bulb seal 62 is attached to the perimeter of the firewall 17 for sealing off the engine from the aircraft. The seal 62 is itself protected by a seal retainer (not shown) extending from the firewall 17. When the rotatable casing halves 18 are closed and latched together, the seal 62 is compressed and mates with a seal land (not shown) located on each casing 18. An access panel 72 is provided in firewall 17 for routing the engine's accessory connections out of the tailcone assembly 10. All engine accessory connections may be advantageously made in the cavity between the firewall 17 and the aircraft bulkhead 32.

The rotatable casings 18 enclose almost the entire forward portion of the tailcone assembly 10. Each casing 18 extends longitudinally from the forward end of the tailcone rearward to a point approximately adjacent the engine exhaust, and wraps circumferentially all the way around to the bottom of the tailcone, abutting one another along their lower longitudinal edges 57. Four spaced apart latches 58 are used along the lower longitudinal edges 57 to latch the casings 18 to one another. Additional latches on the forward and aft edges of the rotatable casings may be used to provide additional support. Preferably latches 58 are flush with the outer surface of the casings 18 when closed and latched.

The rotatable casings 18 provide access to the entire APU for performing various engine maintenance by opening one or both sides. The casings 18 are large enough to allow for removal of the APU from the aircraft when required, such as for performing a hot section overhaul, without need for removal of any casing from the aircraft. The aft edges of the casings 18 are undercut to define a lip 64 which overlays a mating step 66 in the forward edge of the exhaust cone 20, as illustrated in FIG. 1A, thereby creating a lap joint arrangement when the rotatable casings are closed and latched. A similar undercut is provided in the forward edge of the casings 18 for overlaying the perimeter of the aircraft bulkhead 32.

The rotatable casings 18 are hingeably connected to gooseneck hinges 54 and 56 extending from support member 14. The forward and aft gooseneck hinges 54 are rigidly attached to the sides of support member 14. A single piece floating hinge 56 is disposed between fixed hinges 54, and defines the center gooseneck hinge for both casing halves 18. The floating hinge 56 comprises a single bar formed into the goosenecks at each end, free to slide laterally and vertically in a slot 53 formed in the support member 14. The floating hinge 56 self aligns with the fixed hinges 54, thereby ensuring free movement of the casing 18, and enabling alignment of casings 18 to be controlled solely by adjustment of fixed hinges 54. Alternative hinging arrangements, for example strip piano type hinges, may be used instead of the gooseneck type depending upon the constraints of the installation.

The rotatable casings 18, are preferably made of a composite skinned honeycomb sandwich construction as shown in FIG. 5. The core material in the sandwich construction is a honeycomb structure 63 typically made of either Titanium metal or Phenolic - a paper based material. The inner and outer exterior surfaces 65 of the sandwich are made of a carbon fiber reinforced plastic (CFRP). The CFRP consists of carbon fiber and a plastic matrix, where the plastic matrix may be an epoxy, bismaleimide, or polyimide; the latter having higher temperature capability. If an epoxy based CFRP is used, a thermal blanket may be required to shield the doors from engine heat. Such a thermal blanket would typically be made from woven "Teflon" or "Capton" material, and pinned to the inside of the rotatable casings. The outer external surface includes layers of copper foil or nickel mesh 67 for lightning protection. Kevlar plies may be added to the inside surface of the casings 18, and a higher density honeycomb core used adjacent the turbine and compressor wheels of the gas turbine engine for improved fragment containment. The rotatable casings 18 may alternatively be made of a suitable sheet metal, such as .040 inch thick Titanium 6AL-4V with stringer reinforcement. Casings made of Titanium or other metal do not require the addition of copper foil for lightning protection.

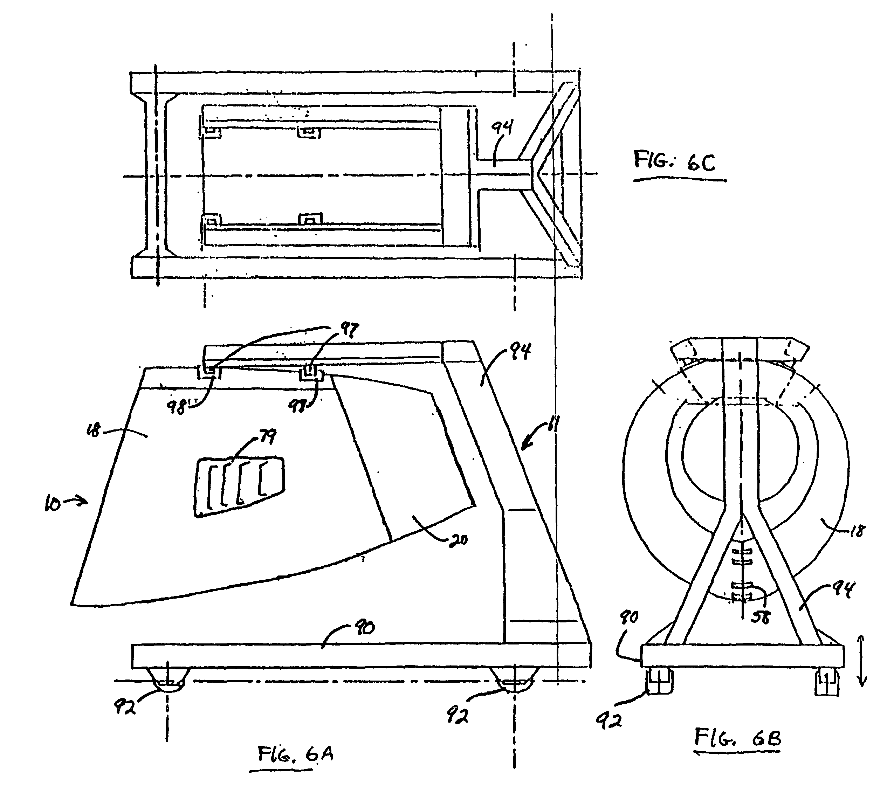

The tailcone assembly 10 includes means for ducting combustion air to the engine, illustrated in FIG. 4. One of the rotatable casings 18 includes an inlet aperture 74 aligned with an integral inlet conduit or duct 76 extending from the inside surface of the casing 18 to an open end adjacent the engine inlet 80. The inlet conduit 76 includes a gasket 78 at its open end such that when the casings 18 are closed and latched, inlet conduit 76 sealingly mates up with the engine inlet 80, thereby defining a duct from the engine inlet to the ambient air. Inlet conduit 76 is integral with casing 18 and preferably constructed of the same type of honeycomb composite material.

The inner surfaces of the conduit 76 receive an acoustic treatment for suppressing engine noise. The treatment comprises perforating the entire inner composite surface of the honeycomb composite with a plurality of small diameter (approximately 1/16 inch) closely spaced holes 77. Noise abatement may alternatively be achieved by incorporating a wire mesh layer known in the industry as a septum (not shown) into the honeycomb composite structure. The septum may be disposed between the inner composite surface and the honeycomb, or between two layers of honeycomb. A suitable louvered cover plate or actuated door 79 for directing air into the ducting and filtering out foreign objects is located over aperture 74. The cover plate 79 may include means for restricting the amount of airflow entering the conduit such as through adjustable louvers, or multiple positionable door.

Referring to FIG. 3, the aft most portion of the tailcone is an integral exhaust cone 20 rigidly mounted to the aft end of support member 14 by a bracket 85. The outer surface of the exhaust cone 20 defines the exterior surface of the tailcone aft of the casings 18. The exhaust cone structure comprises a tapered hollow shell, with an open aft end 21 and a bulkhead 86 at the forward end. The bulkhead 86 defines an aperture 88 adapted for sealingly connecting the exhaust cone 20 to the engine exhaust. Preferably the exhaust cone 20 is constructed of the same type of light weight honeycomb composite as the rotatable casings 18, namely either epoxy Bismaleimide or Polyimide matrix CFRP covering a honeycomb core; or alternatively a more conventional Titanium sheet and stringer construction.

Once attached to the engine exhaust, the exhaust cone 20 functions as a conduit for porting exhaust gas out of the tailcone assembly 10, taking the place of a conventional tail pipe. The exhaust cone 20 also includes means for suppressing exhaust noise such as a felt metal facesheet 87 and felt metal baffles 89. Importantly, the exhaust cone 20 acts as the outercasing for the muffler, thereby providing an integrated muffler and exhaust cone.

An adjustable height dolly 11, shown in FIGS. 6A through 6C facilitates installation and removal of the tailcone assembly 10 from an aircraft. The dolly or cart 11 includes a base portion 90 having steerable adjustable height wheels 92, and a frame portion 94 extending vertically from and overhanging the base portion. The frame portion 94 includes fittings 97 for suspending the tailcone assembly 10 from suspension points 98 located on the top of the tailcone.

With the tailcone mounted in the dolly 11, the dolly may be rolled up to the rear bulkhead of the aircraft for installation. Any required fine adjustments in mounting alignment are made by adjusting the height of wheels 92. Alternatively, any other suitable system for final height and angle adjustment of the tailcone assembly 10 may be used, such as adjustable height frame 94 or adjustable fittings 97 thereon. When adequately positioned and aligned, the engine's accessory connections are made and the tailcone 10 is bolted to the aircraft.

## Claims

1. An integrated muffler and exhaust cone (20), for use in a tailcone assembly (10) having a gas turbine engine (12) mounted therein, comprising a casing defining a conduit for porting the exhaust gas from said engine (12) out of said tailcone assembly (10) and further comprising a plurality of baffles (89) circumscribing said conduit inside said casing.

2. The integrated muffler and exhaust cone (20) of claim 1, wherein said baffles (89) are lined with a felt metal material.

3. The integrated muffler and exhaust cone (20) of claim 1, further comprising a felt metal face sheet (87) disposed around said conduit.

4. The integrated muffler and exhaust cone (20) of claim 3, wherein said felt metal face sheet is disposed between said conduit and said baffles.

5. The integrated muffler and exhaust cone (20) of claim 1, further comprising an open aft end (21) and a bulkhead (86) at the forward end, said bulkhead (86) having an aperture (88) for receiving the exhaust gas form said engine (12).

6. The integrated muffler and exhaust cone (20) of claim 1, wherein said casing is tapered.

7. An aircraft tailcone assembly (10) including an integrated muffler and exhaust cone (20) according to any of claims 1 to 6.

## Patentansprüche

1. Integrierter Schalldämpfer und Abgaskegel (20) zur Verwendung in einer Heckkonusanordnung (10), in der ein Turbomotor (12) angebracht ist, mit einem eine Leitung zur Abführung des Abgases von dem Motor (12) aus der Heckkonusanordnung (10) definierenden Gehäuse und weiterhin mit mehreren die Leitung begrenzenden Prallflächen (89) innerhalb des Gehäuses.

2. Integrierter Schalldämpfer und Abgaskegel (20) nach Anspruch 1, bei dem die Prallflächen (89) mit Feltmetal-Material verkleidet sind.

3. Integrierter Schalldämpfer und Abgaskegel (20) nach Anspruch 1, weiterhin mit einer um die Leitung herum angeordneten Feltmetal-Stirnplatte (87).

4. Integrierter Schalldämpfer und Abgaskegel (20) nach Anspruch 3, bei dem die Feltmetal-Stirnplatte zwischen der Leitung und den Prallflächen angeordnet ist.

5. Integrierter Schalldämpfer und Abgaskegel (20) nach Anspruch 1, weiterhin mit einem offenen hinteren Ende (21) und einer Schottwand (86) am vorderen Ende, wobei die Schottwand (86) eine Öffnung (88) zur Aufnahme des Abgases vom Motor (12) enthält.

6. Integrierter Schalldämpfer und Abgaskegel (20) nach Anspruch 1, bei dem das Gehäuse konisch zulaufend ist.

7. Flugzeugheckkonusanordnung (10) mit einem integrierten Schalldämpfer und Abgaskegel (20) nach einem der Ansprüche 1 bis 6.

## Revendications

1. Silencieux intégré et cône d'échappement (20) pour utilisation dans un ensemble cône de queue (10) à l'intérieur duquel est monté un moteur de turbine à gaz (12), comprenant un carter qui définit un conduit pour acheminer les gaz d'échappement dudit moteur (12) hors dudit ensemble cône de queue (10) et comprenant en outre plusieurs chicanes (89) qui circonscrivent ledit conduit à l'intérieur dudit carter.

2. Silencieux intégré et cône d'échappement (20) selon la revendication 1, dans lesquels lesdites chicanes (89) sont doublées d'un matériau en feutre métallique.

3. Silencieux intégré et cône d'échappement (20) selon la revendication 1, comprenant en outre une feuille de revêtement en feutre métallique (87) disposée autour dudit conduit.

4. Silencieux intégré et cône d'échappement (20) selon la revendication 3, dans lesquels ladite feuille de revêtement en feutre métallique est disposée entre ledit conduit et lesdites chicanes.

5. Silencieux intégré et cône d'échappement (20) selon la revendication 1, comprenant en outre une extrémité arrière ouverte (21) et une cloison (86) à l'extrémité avant, ladite cloison (86) comportant une ouverture (88) pour recevoir les gaz d'échappement dudit moteur (12).

6. Silencieux intégré et cône d'échappement (20) selon la revendication 1, dans lequel ledit carter est conique.

7. Ensemble cône de queue d'un avion (10) comprenant un silencieux intégré et un cône d'échappement (20) selon l'une quelconque des revendications 1 à 6.
